Europäisches Patentamt

(19) European Patent Office

Office européen des brevets

(11) Publication number: **0 102 539**
**B1**

# (12) EUROPEAN PATENT SPECIFICATION

(45) Date of publication of patent specification: **04.02.87**

(51) Int. Cl.⁴: **A 61 M 1/18**

(21) Application number: **83107751.6**

(22) Date of filing: **05.08.83**

(54) **A hollow thread device for removing waste material in the blood and a process of manufacture thereof.**

(30) Priority: **06.08.82 JP 136399/82**

(43) Date of publication of application:
**14.03.84 Bulletin 84/11**

(45) Publication of the grant of the patent:
**04.02.87 Bulletin 87/06**

(84) Designated Contracting States:
**DE FR GB SE**

(56) References cited:
**EP-A-0 005 866**
**DE-A-2 641 709**
**GB-A-1 515 452**
**US-A-4 201 673**
**US-A-4 291 096**

(73) Proprietor: **KAWASUMI LABORATORIES INC.**
**2-7-15, Minamirokugo Otaku**
**Tokyo (JP)**

(72) Inventor: **Kawano, Takumi**
**1858 Seya-machi Seya-ku**
**Yokohama-shi Kanagawa-ken (JP)**

(74) Representative: **Klingseisen, Franz, Dipl.-Ing.**
**et al**
**Dr. F. Zumstein sen. Dr. E. Assmann Dr. R.**
**Koenigsberger Dr. F. Zumstein jun. Dipl.-Ing. F.**
**Klingseisen Bräuhausstrasse 4**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention refers to a method according to the preamble of claim 1.

EP—A—0005868 discloses a method of this kind during which the housing of the device is rotated about the centre thereof so as to throw by centrifugal force potting material to the ends of the housing. In this way partition walls are provided on the end portions of the hollow fibres in the housing. Due to the pressure in the potting material during application of the centrifugal force the cross-section of the hollow fibres which are surrounded at the end portions by the potting material becomes non-circular and the internal diameter of the fibres tends to decrease. In this way the blood flow in the hollow fibres is hindered and the efficiency of the device is lowered. Further the potting material does not perfectly adhere on the outside of the hollow fibres due to deformed cross-section. The same problem arises in connection with the device according to DE—A—2 641 709.

From US—A—4 291 096 it is known to provide hollow fibres with a wall thickness in the range from 2 to 20µ and with an inner diameter from 150 to 300µ. In this case hollow fibres are provided which have along their length a plurality of points with maximum outside diameter and points of minimum outside diameter so that the cross-section of a hollow fibre varies over the length.

It is the object of the present invention to improve the known method for producing a hollow fibre device in such a way that the inner diameter of the hollow fibres does not tend to decrease towards the ends of the fibres surrounded by the potting material and that the cross-section of the fibres does not become non circular so that the blood flow and the efficiency of the device is improved.

This object is achieved by the features in the characterizing part of claim 1. The liquid in the hollow fibres is under pressure at the end portions of the fibres during application of the centrifugal force so that the cross-section of the hollow fibres cannot be deformed by the potting material surrounding the fibres. The cross-section of the fibres is maintained circular and the inner diameter remains at least constant or increases towards the ends of the fibres.

The invention will be discussed in more detail with reference to the attached drawings.

Fig. 1 is a partial cross sectional view of a hollow fibre device for removing waste material or transferring undesirable substances in the blood.

Fig. 2 (a) is an outline view showing shapes at the ends of a conventional hollow fibre,

Fig. 2 (b) ia an outline view showing shapes at the openings of the hollow fibres,

Fig. 3 is an outline view showing that the hollow fibres are stored on a spool,

Fig. 4 is an outline view of bundles of hollow fibres,

Fig. 5 is an outline cross sectional view for explaining a manufacturing process according to the invention,

Fig. 6 (a) is an outline view showing shapes at the ends of a hollow fibre device, and

Fig. 6 (b) is an outline view showing shapes at the openings of the same.

For patients lacking functioning of kidney, semipermeable membranes made of hollow fibres have been used for hemo dialyzers, filters or oxygen suppliers in an artificial lung for exchanging oxygen and carbonic acid gas.

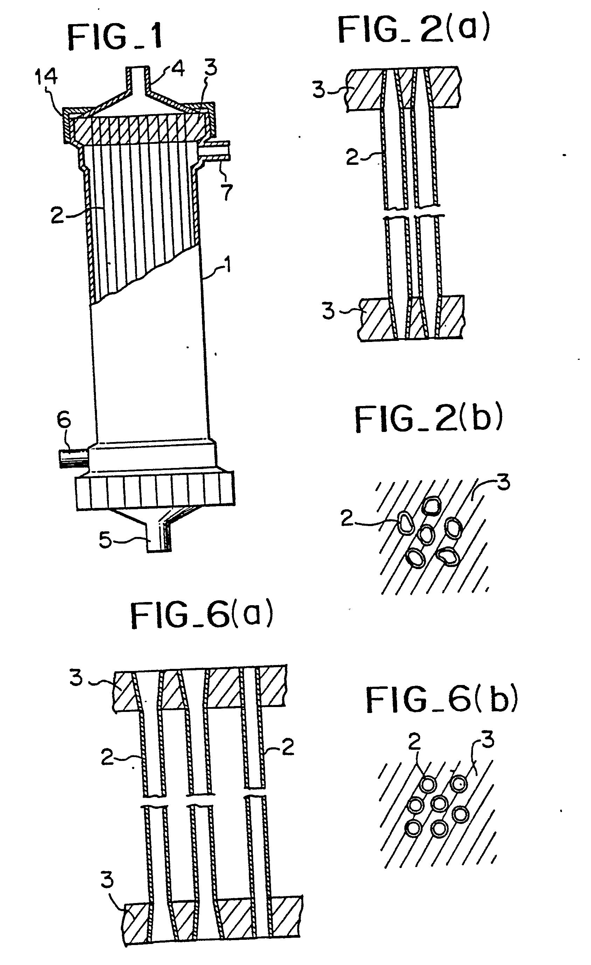

The prior art, for example as shown in fig. 1, contains in a housing 1 a large number of hollow fibres 2 having fine holes in their walls both ends of the fibres being fixed with the potting material made of polyurethane, silicone resin or the like, and the housing has a blood inlet 4 at one end and a blood outlet 5 at the other end.

Hemo dialysis is carried out by introducing blood of the patient through the hollow fibres 2 via the inlet 4, while the dialisate is introduced into the housing 1 via an inlet 6. Waste or noxious material in the blood passes through the wall of the hollow fibre 2 into the dialisate due to the pressure difference across the walls and is removed to the outside via an outlet 7. During manufacturing the hollow fibre device a centrifugal force is applied so that the potting material 3 closely surrounds the end portion of the hollow fibres. Due to the centrifugal force the potting material is under pressure so that the end-portions of the hollow fibres become smaller in cross-section as shown in Fig. 2(a). Further the cross-section of the hollow fibres 2 will be deformed by the potting material as shown in Fig. 2(b).

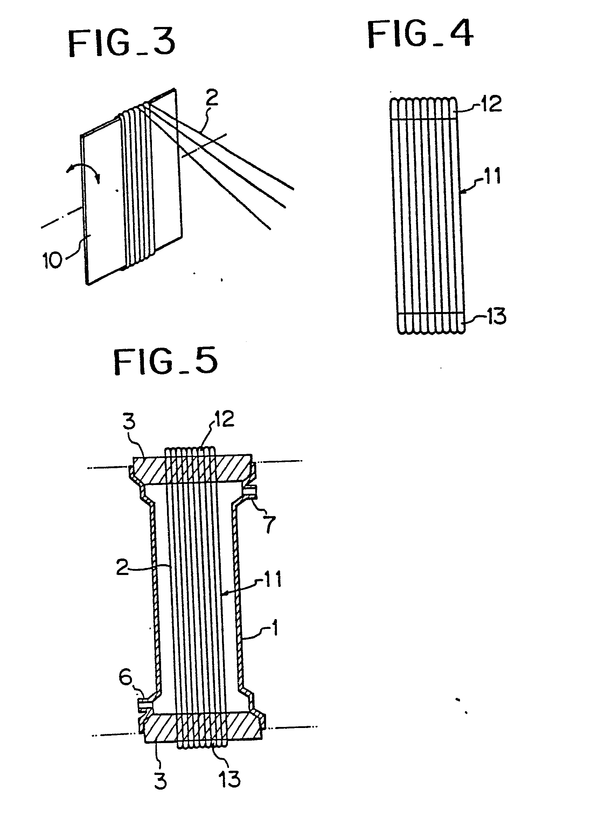

An actual embodiment of the invention will be explained with reference to an artificial kidney of the hollow fibre type. The hollow fibres 2 are, as shown in Fig. 3, wound from a plurality of bobbins onto a spool of plate shape. The fibres 2 are then drawn from the spool 10 and bundles 11 are made as shown in Fig. 4.

For hollow fibres 2 for blood dialysis, filtering devices or the artificial lungs, cellulose substances are needed such as cuprammonium rayon, viscose rayon or cellulose acetate, otherwise synthetic polymer substances such as polyvinyl alcohol, ethylene vinyl alcohol, polypropylene or polymethyl methacrylate. The inner diameter of the fibre is around 200 to 300µ and the wall thickness is around 5 to 20µ. The bundles 11 remain curved at both ends 12, 13 and the hollow fibres hold the liquid therewithin. The bundles are applied with a stopper at both ends and are set in the housing 1. Subsequently each end is covered by a cap, and the potting material such as polyurethane or silicone resin is poured onto the both ends via appropriate means (for example via the dialyzing ports 6 and 7), and centrifugal force is applied to the ends. The centrifugal force is 60 to 200G, preferably 85 to 125G, though it depends upon the thickness of the fibre and other conditions. The potting material 3 is urged towards the ends of the housing 1 and goes closely between the fibres 2. The agent solidified with time and rigidly holds the hollow fibres.

After solidification of the potting material, the housing 1 is taken out from the centrifuge and an end part of the mass of the potting material 3 is cut transversely to the length as shown with chain line in Fig. 5, and fibres 2 are thereby made open at their ends. Then the housing 1 is provided with a blood inlet 4 and outlet 5 by means of rings 14 as shown in Fig. 1.

As has been mentioned, it is important that the hollow fibres are subjected to the centrifugation under the condition that the hollow fibres are filled with liquid. To this end, the ends 12, 13 of the bundles 11 should be closed, and any means may be need for this. For example, the ends may be tied or closed with a sealing agent. In the above embodiment, the ends are closed, and, depending upon conditions, only one end may be closed. Further Fig. 3 illustrates an example of the spool 10, which need not be a plated spool. The above mentioned embodiment has been explained with the example of the artificial kidney, and the method according to the invention may be employed to produce a hollow fibre device for medical apparatus such as an oxygen supplyer, or other kinds of using the hollow fibres such as industrial filtering devices.

If the liquid used to fill the fibres 2 have a specific gravity greater than that of the potting material 3, the ends will be shaped more effectively as described below.

The hollow fibres 2 are filled with the liquid and are housed within the housing under the condition that the ends of the fibres are closed, and the potting material is applied to the end portions of the fibres. After having applied the potting material or while applying it, the centrifugal force is applied which urges the filled liquid towards the end portions of the fibres, so that an internal pressure is produced at the ends. The internal pressure is greater than the external pressure which is produced by the potting material 3 on the outer circumference of the end portions of the hollow fibres. The hollow fibres are made from elastic material such as cellulose, synthetic polymer substances or the like, having a wall thickness such that their inner diameter is enlarged by the pressure of the filled liquid due to the centrifugal force. Therefore, as shown at the left side in Fig. 6(a), the inner diameter of the hollow fiber becomes greater or is constant along the length as shown at the right side in Fig. 6(a) because the internal and external pressures at the end portions of the fibre are equal. Shapes in horizontal cross-section are, as shown in Fig. 6(b) circular.

Therefore the invention in comparison with the prior art allows a smoother flow of the liquid within the hollow fibre, so that blood hemolysis or coagulation may be avoided and the blood is smoothly returned after completion of the dialysis or the filtering. Blood blockage may be also prevented from the interior or openings of the hollow fibres, and bubble removal may be carried out easily at priming. Since the blood flow within the hollow fibre is smooth, the dialytic effect per unit area is increased compared to the prior art. Therefore it is not necessary to increase the cross sectional areas of the inlet and outlet. In addition, the amount of potting material used may be reduced so that the body is lighter.

Since the opening at the end portion of the hollow fibre is circular the potting material is perfectly adhered to the outer circumference, thereby preventing leakage of the blood.

**Claims**

1. Method for producing a hollow fibre device for removing waste material in blood comprising the steps of arranging bundles of hollow fibres (2) in a housing (1), supplying a potting material (3) to the end portions of the hollow fibres by applying centrifugal force on the housing (1) and cutting the end portions so that the ends of the hollow fibres (2) are open, characterized in that before being arranged in the housing (1) the hollow fibres (2) are filled with liquid the pressure of which due to the centrifugal force increases or maintains constant the inner diameter of the hollow fibres towards the ends of the fibres and maintains a circular cross-section of the fibre ends.

2. Method according to claim 1, wherein the hollow fibres are stored on a spool (10) in bundles and the bundles are set in the housing (1).

3. Method according to claim 1, wherein the hollow fibres are made from a cellulose or synthetic polymer substance of 200 to 300μ inner diameter and 5 to 20μ thickness.

4. Method according to claim 1, wherein both end portions of the hollow fibres are tied and closed.

5. Method according to claim 1, wherein both end portions of the hollow fibres are closed with a sealing agent.

6. Method according to claim 1, wherein the liquid in the hollow fibres has a specific gravity greater than that of the potting material.

7. Method according to claim 1, wherein the centrifugal force is 60 to 200G.

**Patentansprüche**

1. Verfahren für die Herstellung einer Hohlfasereinrichtung zur Entfernung von verbrauchten Stoffen aus dem Blut, das die folgenden Stufen umfaßt: Anordnung von Hohlfaserbündeln (2) in einem Gehäuse (1), Aufbringen eines Vergießmaterials (3) an den Endabschnitten der Hohlfasern durch Anlegen einer Zentrifugalkraft am Gehäuse (1) und Schneiden der Endabschnitte, so daß die Enden der Hohlfasern (2) offen sind, dadurch gekennzeichnet, daß die Hohlfasern (2) vor der Anordnung im Gehäuse (1) mit einer Flüssigkeit gefüllt werden, deren Druck aufgrund der Zentrifugalkraft den inneren Durchmesser der Hohlfasern in Richtung auf die Faserenden vergrößert oder konstant hält und einen

5      0 102 539      6

kreisförmigen Querschnitt der Faserenden aufrechterhält.

2. Verfahren nach Anspruch 1, wobei die Hohlfasern in Bündeln auf einer Spule (10) und die Bündel im Gehäuse (1) angeordnet werden.

3. Verfahren nach Anspruch 1, wobei die Hohlfasern aus Zellulose oder einer synthetischen Polymersubstanz von 200 bis 300 µ Innendurchmesser und 5 bis 20 µ Dicke bestehen.

4. Verfahren nach Anspruch 1, wobei beide Endabschnitte der Hohlfasern abgebunden und geschlossen werden.

5. Verfahren nach Anspruch 1, wobei beide Endabschnitte der Hohlfasern durch ein Dichtmaterial verschlossen werden.

6. Verfahren nach Anspruch 1, wobei die Flüssigkeit in den Hohlfasern ein größeres spezifisches Gewicht als das Vergießmaterial hat.

7. Verfahren nach Anspruch 1, wobei die Zentrifugalkraft 60 bis 200 G ist.

**Revendications**

1. Procédé pour produire un dispositif à fibres creuses pour retirer un matériau résiduaire dans le sang, comportant les étapes de disposition de faisceaux de fibres creuses (2) dans un boîtier (1), de fourniture d'un matériau d'enrobage (3) dans les parties d'extrémité des fibres creuses en appliquant une force centrifuge au boîtier (1) et de coupe des parties d'extrémité de façon à ce que les extrémités des fibres creuses (2) soient ouvertes, caractérisé en ce que:

avant d'être disposées dans le boîtier (1), les fibres creuses (2) sont remplies de liquide dont la pression, due à la force centrifuge, acroît ou maintient constant le diamètre intérieur des fibres creuses vers les extrémités des fibres et maintient circulaire une section transversale des extrémités des fibres.

2. Procédé selon la revendication 1, dans lequel les fibres creuses sont stockées sur une bobine (10) en faisceaux et les faisceaux sont disposés dans le boîtier (1).

3. Procédé selon la revendication 1, dans lequel les fibres creuses sont faites d'une substance cellulosique ou polymère synthétique, avec un diamètre intérieur compris entre 200 et 300 µ et une épaisseur comprise entre 5 et 20 µ.

4. Procédé selon la revendication 1, dans lequel les deux parties d'extrémité des fibres creuses sont attachées et fermées.

5. Procédé selon la revendication 1, dans lequel les deux parties d'extrémité des fibres creuses sont fermées avec un agent de scellement.

6. Procédé selon la revendication 1, dans lequel le liquide dans les fibres creuses a un poids volumique supérieur à celui du matériau d'enrobage.

7. Procédé selon la revendication 1, dans lequel la force centrifuge est comprise entre 60 et 200 G.

FIG_1

FIG_2(a)

FIG_2(b)

FIG_6(a)

FIG_6(b)

## FIG_3

## FIG_4

## FIG_5